# EUROPÄISCHE PATENTSCHRIFT

(11) **EP 3 416 890 B1**
(45) Veröffentlichungstag und Bekanntmachung des Hinweises auf die Patenterteilung: **28.10.2020**
(21) Anmeldenummer: 17704792.5
(22) Anmeldetag: 17.02.2017
(51) Int. Cl.: B65B 3/00, A61J 3/00, F16K 27/00

(54) **VENTILEINHEIT FÜR EINE ANLAGE ZUR HERSTELLUNG EINER MEDIZINISCHEN ZUBEREITUNG**
PLANT FOR PRODUCING A MEDICAL PREPARATION
PROCEDE DE FABRICATION D'UNE PREPARATION MEDICAMENTEUSE

(30) Priorität: 19.02.2016 EP 16156529; 19.02.2016 WO PCT/EP2016/156531; 09.06.2016 EP 16173695; 09.06.2016 WO PCT/EP2016/173696
(43) Veröffentlichungstag der Anmeldung: 26.12.2018
(73) Patentinhaber: Fresenius Kabi Deutschland GmbH, 61352 Bad Homburg (DE)
(72) Erfinder: BIEHL, Martin, 66606 St. Wendel (DE); HOCK, Michael, 35516 Münzenberg (DE); SCHAAKE, Henrik, 61348 Bad Homburg (DE); BORGWARD, Marcel, 74196 Neuenstadt/Stein am Kocher (DE)
(74) Vertreter: Fresenius Kabi Deutschland GmbH
(86) Internationale Anmeldenummer: PCT/EP2017/053626
(87) Internationale Veröffentlichungsnummer: WO 2017/140849

(56) Entgegenhaltungen:
- CN-A- 104 161 677
- US-A- 3 647 118
- US-A- 4 718 467
- US-A- 5 313 992
- US-A- 5 431 202

## Beschreibung

### Gebiet der Erfindung

Die Erfindung betrifft eine Ventileinheit für eine Anlage zur Herstellung einer medizinischen Zubereitung. Insbesondere betrifft die Erfindung eine Ventileinheit für eine Anlage, mit der z.B. Infusionsbeutel oder Spritzen zur parenteralen Ernährung befüllt werden.

### Hintergrund der Erfindung

Anlagen zur Herstellung einer medizinischen Zubereitung, insbesondere zur Herstellung einer Zubereitung zur parenteralen Ernährung, werden z.B. in Apotheken oder Kliniken verwendet, um eine patientenspezifische Zubereitung, insbesondere ein Gemisch aus verschiedenen Grundnahrungsstoffen, Spurenelementen und Vitaminen, ggf. auch zusammen mit einem Arzneimittel, abzufüllen.

Derartige Anlagen werden auch als TPN-Compounder (TPN = Total Parenteral Nutrition) bezeichnet. Aus der Praxis bekannte und im Markt befindliche Anlagen, wie beispielsweise das System MultiComp® der Firma Fresenius, umfassen eine computergesteuerte Pumpeneinheit, mit der die Bestandteile der Zusammensetzung aus verschiedenen Quellbehältern in einen auf einer Waage befindlichen Zielbehälter überführt werden.

Zumindest in dem Fall, dass nicht für jeden Quellbehälter eine separate Pumpe vorhanden ist, ist es notwendig, das Zudosieren aus verschiedenen Quellbehältern über Ventile zu steuern.

US 5 313 992 zeigt eine Transferschlaucheinheit für Compoundier-Lösungen bekannt Nachteilig ist, dass die Bereitstellung von Ventilen aufwendig ist. Wiederverwendbare Ventile kommen wegen deren schlechter Reinigbarkeit zumeist nicht in Betracht.

### Aufgabe der Erfindung

Der Erfindung liegt demgegenüber die Aufgabe zugrunde, eine Ventileinheit für eine Anlage zur Herstellung einer medizinischen Zubereitung bereit zu stellen, welche einfach und kompakt ausgestaltet ist und welche sich insbesondere auch als Einweg-Bauteil, als sogenanntes "Disposable", hinreichend preiswert bereitstellen lässt.

### Zusammenfassung der Erfindung

Die Aufgabe der Erfindung wird bereits durch eine Ventileinheit nach einem der unabhängigen Ansprüche gelöst. Bevorzugte Ausführungsformen und Weiterbildungen der Erfindung sind dem Gegenstand der jeweils abhängigen Ansprüche, der Beschreibung und den Figuren zu entnehmen.

Die Erfindung betrifft eine Ventileinheit für eine Anlage zur Herstellung einer medizinischen Zubereitung. Insbesondere kann die Ventileinheit auf der Anlage befestigt und nach Benutzung wieder abgenommen werden.

Insbesondere betrifft die Erfindung eine Ventileinheit für eine Anlage zur Zubereitung von parenteraler Ernährung, also einer Anlage, mit der Inhaltsstoffe aus verschiedenen Quellbehältern in einer patientenspezifischen Zusammensetzung einem Zielbehälter zugeführt werden.

Die Ventileinheit umfasst ein Gehäuse mit einer Mehrzahl von Zuläufen, wobei die Zuläufe über Ventile mit einem Ablauf verbindbar sind. Über den Ablauf wird der Zielbehälter gefüllt.

Die Ventileinheit ist insbesondere als austauschbares Einweg-Bauteil, vorzugsweise nach Art einer Kassette ausgebildet, wobei die Ventile Eingriffmittel zur mechanischen Betätigung zum Öffnen und Schließen aufweisen.

Über diese Eingriffmittel, welche insbesondere als Schlitze ausgebildet sind, können die in dem Gehäuse sitzenden Ventile über einen anlagenseitig vorhandenen Motor geöffnet und geschlossen werden oder (allgemeiner ausgedrückt) betätigt werden.

So ist während des Betriebs der Anlage in der Regel immer nur ein Ventil geöffnet, so dass nur aus einem Quellbehälter Flüssigkeit entnommen werden kann. Es werden also nach und nach über die verschiedenen Zuläufe die unterschiedlichen Bestandteile aus verschiedenen Quellbehältern zur Befüllung des Zielbehälters in diesen transferiert.

Gemäß der Erfindung sind die Ventile zumindest als 3-Wegeventile ausgebildet. Es hat sich herausgestellt, dass über die Verwendung von 3-Wegeventilen eine derartige Ventileinheit einfach und kompakt ausgestaltet realisiert werden kann. Das Wegeventil umfasst zumindest zwei Zuläufe und einen Ablauf, so dass zwei Quellbehälter an einem einzigen Ventil angeschlossen sein können.

Insbesondere werden Ventile verwendet, welche als 3/3-Wegeventile mit einer gesperrten Stellung, vorzugsweise einer gesperrten Mittelstellung, ausgebildet sind. So kann ein einziges Ventil die Zuläufe von zwei Quellbehältern öffnen und schließen.

Vorzugsweise sind die Ventile als Kükenventile ausgebildet.

Bei einer Ausführungsform der Erfindung sind die Ventile in zumindest zwei, vorzugsweise geraden, Reihen angeordnet. Vorzugsweise sind die in den Reihen vorhandenen Ventile gegenüber einander versetzt angeordnet. Vorzugsweise ist ein Ventil einer Reihe mittig gegenüber den gegenüberliegenden Ventilen der anderen Reihe angeordnet.

In einer Draufsicht auf die Ventileinheit gesehen, bilden die Ventile, und damit die Eingriffmittel zur mechanischen Betätigung, also keine Anordnung, bei denen sich virtuelle Geraden, welche die Ventile verbinden, in einem rechten Winkel schneiden.

Vielmehr sind die Ventile und damit die Eingriffmittel zur mechanischen Betätigung vorzugsweise nach dem Prinzip der hexagonal dichtesten Packung, aber voneinander beabstandet, angeordnet.

Die Ventile können so dichter zusammengesetzt werden, was ebenfalls eine kompaktere Ausgestaltung ermöglicht. Dies resultiert insbesondere in ein verringertes Volumen der Ventileinheit und damit ein verringertes Totvolumen.

Die Zuläufe der Ventile können dagegen in Reihen angeordnet sein, wobei die Zuläufe (bis auf randseitige Zuläufe) jeweils direkt oder im Wesentlichen direkt gegenüber den Zuläufen der gegenüberliegenden Reihe liegen.

Vorzugsweise grenzen die Ventile an einen Kanal im Gehäuse der Ventileinheit an, wobei zwischen dem Kanal und einem Auslass des Ventils eine Öffnung vorhanden ist. Der Kanal weist vorzugsweise seitlich zu den Ventilen abgehende Öffnungen auf.

Die Öffnung kann jeweils beispielsweise dadurch realisiert sein, dass das Ventilgehäuse eine rotationssymmetrische Form hat, innerhalb der sich das Küken des Ventils drehen kann. Vorzugsweise ist das Ventilgehäuse im Wesentlichen kreiszylinderförmig ausgebildet. Diese Kreiszylinderform überschneidet sich in einer Aufsicht mit dem Kanal, so dass an der Überschneidungsstelle die Öffnung und damit der Auslass des 3-Wegeventils ausgebildet ist.

Der Kanal ist seinerseits mit dem Ablauf der Ventileinheit, welcher der Befüllung des Zielbehälters dient, verbunden.

Vorzugsweise hat der Kanal zumindest im Bereich der Ventile einen gleichbleibenden Durchmesser. Dies führt dazu, dass die vorzugsweise identisch ausgeführten Ventile auch mittels einer gleichgroßen Öffnung mit dem Kanal verbunden sind, was wiederum einen identischen Leitwert oder Strömungswiderstand der verschiedenen Ventile im geöffneten Zustand sicherstellt.

Das Gehäuse der Ventileinheit ist vorzugsweise als Spritzgussbauteil ausgebildet.

Das Gehäuse kann insbesondere eine quaderförmige Grundform haben.

Bei einer Ausführungsform der Erfindung ist der Boden des Gehäuses offen und dient der Aufnahme der anlagenseitigen Antriebsmittel, nachdem das Gehäuse auf die Anlage aufgesetzt wurde.

Die Ventile, insbesondere die Ventilgehäuse, die der Aufnahme der Küken dienen, können Teil einer Platte des Gehäuses sein.

Ein Kanal im Gehäuse mit gleichbleibendem Querschnitt lässt sich bei einem Spritzgussbauteil in einer Ausführungsform der Erfindung dadurch realisieren, dass zwei Gehäusebestandteile, eine obere und eine untere Gehäusehälfte, aufeinandergesetzt werden, wobei der Kanal zwischen diesen Gehäusehälften ausgebildet ist.

Bei einer anderen Ausführungsform der Erfindung ist der Kanal in einem einstückig ausgebildeten Gehäuseabschnitt, insbesondere in einem einstückig ausgebildeten Gehäuse, angeordnet.

Die Ventileinheit ist vorzugsweise zur einmaligen Verwendung als sogenanntes "Disposable" vorgesehen. Unter einer einmaligen Verwendung wird eine Ausgestaltung der Ventileinheit verstanden, bei der nicht vorgesehen ist, dass diese gereinigt und wieder verwendet wird.

Bei einer Weiterbildung der Erfindung umfassen die Zuläufe der Ventileinheit jeweils einen Schlauch, wobei Schläuche in zumindest zwei Durchmessern vorhanden sind oder vorhanden sein können.

Insbesondere ist vorgesehen, die Schläuche von Quellbehältern für sogenannte Mikromengen, also beispielsweise Zubereitungen, die Spurenelemente oder Vitamine umfassen, und die in geringer Dosierung zugeführt werden, mit einem kleineren Durchmesser auszugestalten als diejenigen Schläuche, über die die Hauptbestandteile, z. B. Zuckerlösungen, Fettsäuren, Aminosäuren, zudosiert werden.

Ein dünnerer Schlauch kann insbesondere weniger als den zumindest halben Innendurchmesser des größeren Schlauchs aufweisen.

Es ist bei einer Ausführungsform auch vorgesehen, Schläuche mit unterschiedlicher Länge zu verwenden. Insbesondere ist es vorgesehen, dass die dickeren Schläuche zur Dosierung der Hauptbestandteile der Zubereitung länger ausgebildet sind. Größere Quellbehälter können so an einer weiter entfernten Position der Anlage, beispielsweise an einer Stange, aufgehängt werden. Kleinere Quellbehälter können näher an der Ventileinheit angeordnet werden, was die verbleibenden Restmengen dieser häufig teureren Zubereitungsbestandteile beim Austausch der Ventileinheit weiter reduziert.

Vorzugsweise umfasst die Ventileinheit zumindest vier, besonders bevorzugt zumindest acht, ganz besonders bevorzugt zwölf Zuläufe.

Die Ventileinheit kann auf der Anlage befestigt werden. Das Gehäuse der Ventileinheit kann insbesondere Rastmittel umfassen, um einfach auf der Anlage befestigt werden zu können.

Die Ventileinheit kann nach einer Benutzung von der Anlage wieder entfernt und vorzugsweise gegen eine neue Ventileinheit ausgetauscht werden. Die vorstehend genannten Rastmittel sind daher in dieser Variante lösbar ausgestaltet. Vorzugsweise sind die Rastmittel von einer Seite der Ventileinheit her gesehen lösbar, so dass die Verrastung z.B. von vorne gelöst und die Ventileinheit leicht abgenommen werden kann. Dies lässt sich beispielsweise durch einen unter ein anlagenseitiges Formschlusselement greifenden Kragen und einen federnden Rasthaken auf der gegenüberliegenden Seite der Ventileinheit realisieren.

Bei einer Ausführungsform der Erfindung umfasst die Ventileinheit Ventile mit Küken aus einem Elastomer, welche vorzugsweise schmiermittelfrei in dem Gehäuse eingesetzt sind.

Vorzugsweise haben die Küken eine Härte Shore-A von 60 bis 100, bevorzugt von 70-90, besonders bevorzugt von 80 bis 85. In einer Ausführungsform werden die Küken durch ein thermoplastisches Elastomer bereitgestellt. In einem ersten Beispiel ist es ein thermoplastisches Elastomer auf Urethanbasis. Weiterhin kann es ein vernetztes thermoplastisches Elastomer auf Olefinbasis sein, beispielsweise bereitgestellt durch EPDM-Gummipartikel eingeschlossen in einer PP-Matrix.

Es hat sich herausgestellt, dass auf sehr einfache Weise über im Wesentlichen kreiszylindrisch ausgebildete Küken, welche in ein kreiszylindrisch ausgebildetes Ventilgehäuse eingedrückt werden, eine gute Dichtwirkung erzielt werden kann.

Die Küken haben vorzugsweise auf einer Unterseite ein Eingriffselement, insbesondere einen Schlitz, über welchen die Küken über einen Motor von der Anlage über eine anlagenseitig vorhandene Ventilsteuerungseinheit betätigt werden können.

Die Ventileinheit kann, neben den Schläuchen und deren Anschlüssen lediglich aus dem Gehäuse und den in das Gehäuse eingesetzten Küken bestehen und ist so einfach und aus wenigen Bauteilen ausgebildet.

Es hat sich weiter herausgestellt, dass ein im Wesentlichen kreiszylindrisch ausgebildetes Küken, welches zur Öffnung eines Kanals eine Ausnehmung im Mantel aufweist, sich durch das Bewegen der Ausnehmung an der Öffnung zum Kanal hin in axialer Richtung selbst zentriert oder positioniert. Es ist nicht nötig, die Küken bei einem Formschlusselement, wie beispielsweise eine Platte mit Öffnung, zu fixieren.

Vorzugsweise ist das Ventilgehäuse auf seiner Oberseite zumindest teilweise verschlossen, so dass das Küken in Einsetzrichtung einen Anschlag hat. Dies verhindert ein Durchtreten des Kükens durch das Ventilgehäuse bei der Montage der Ventileinheit. Ist die Ventileinheit bestimmungsgemäß auf die Anlage gesetzt, so ist das Küken in einer Richtung durch den Anschlag und in der anderen Richtung durch Eingriffmittel des motorischen Antriebs der Anlage lagegesichert.

Bei einer Weiterbildung der Erfindung ist der Ablauf der Ventileinheit mit einem Schlauch verbunden, welcher zumindest drei Abschnitte umfasst, wobei ein mittlerer Abschnitt ein gegenüber den angrenzenden Abschnitten vergrößerten Querschnitt aufweist.

Es ist insbesondere vorgesehen, dass der am Ablauf vorhandene Schlauch für eine Peristaltikpumpe, insbesondere für eine Schlauchpumpe, beispielsweise Rollenpumpe oder Fingerpumpe, verwendet wird, wobei der mittlere Abschnitt in die Pumpe eingesetzt wird. Bei derartigen Pumpen wird das Medium durch periodisches Zusammendrücken eines Schlauchs gefördert. Der vergrößerte Querschnitt des mittleren Schlauchabschnitts ist so ausgewählt, dass er für die eingesetzte Peristaltikpumpe verwendet werden kann. Die Querschnitte der beiden anderen Schlauchabschnitte sind vorzugsweise auf die geforderten Volumenströme ausgelegt.

So ist die gesamte Strecke von dem Quellbehälter bis zum Anschluss des Zielbehälters als Einweg-Bauteil ausgebildet. Es kommen keine Bauteile, beispielsweise Teile einer Pumpe, mit den transferierten Medien in Kontakt.

Die Erfindung betrifft des Weiteren eine Ventileinheit für eine Anlage zur Herstellung einer medizinischen Zubereitung, insbesondere eine Ventileinheit mit einem oder mehreren der vorstehend erwähnten Merkmale.

Die Ventileinheit umfasst ebenfalls ein Gehäuse mit einer Mehrzahl von Zuläufen, wobei die Zuläufe über Ventile mit einem Ablauf verbindbar sind.

Gemäß der Erfindung umfassen die Ventile Küken, die in das Gehäuse eingesetzt sind, wobei ein Fluid in einer geöffneten Stellung an der Außenfläche der Küken vorbeiführbar ist.

Gemäß der Erfindung dient also die Außenfläche der Küken als Dichtfläche bzw. das Fluid wird im geöffneten Zustand an der Außenfläche der Küken entlanggeführt.

Die Küken sind vorzugsweise kreiszylindrisch ausgeführt und umfassen im Mantel zumindest eine Ausnehmung, über die in einer geöffneten Stellung der Kanal zwischen Zulauf und Ablauf des Ventils freigegeben wird. Vorzugsweise haben die Küken zwei gegenüberliegende Ausnehmungen. Für jede der geöffneten Stellungen ist je eine Ausnehmung zugeordnet.

Die Ventile werden vorzugsweise lediglich in die Ventilgehäuse, die im Gehäuse der Ventileinheit ausgebildet sind, eingepresst.

Bei einer Weiterbildung der Erfindung umfassen die Küken, welche vorzugsweise aus einem Elastomer ausgebildet sind, oberhalb und unterhalb der Ausnehmung zumindest einen umlaufenden Steg, welcher gegenüber dem Gehäuse eine Dichtlippe ausbildet.

Vorzugsweise sind zumindest zwei und besonders bevorzugt mindestens drei axial voneinander beabstandete Stege vorgesehen.

Über diese Stege wird die Ventileinheit nach außen gedichtet. Die Stege erleichtern des Weiteren das Einpressen der Küken, da das Material der Stege zur Seite hin ausweichen kann.

Bei einer Weiterbildung der Erfindung ist vorgesehen, dass das Küken, insbesondere angrenzend zur Ausnehmung, in axialer Richtung verlaufende Stege ausweist. Diese dienen als Dichtlippen des Ventils in dessen geschlossener Stellung bzw. als Dichtmittel gegenüber dem jeweils nicht geöffneten Kanal.

Gemäß einem weiteren Aspekt der Erfindung umfassen die Zuläufe einer Ventileinheit jeweils einen Schlauch, welcher untrennbar, z.B. durch Schweißen oder Verkleben, mit dem Gehäuse verbunden ist.

Unter einer untrennbaren Verbindung wird eine Verbindung verstanden, die sich bei bestimmungsgemäßer Verwendung nicht zerstörungsfrei lösen lässt.

Dies vereinfacht die Verwendung der Ventileinheit, da der Benutzer keine Schläuche anschließen muss. Auch wird die Sicherheit erhöht, da zum einen keine Anschlüsse verwechselt werden können und zum anderen einzelne Schläuche nicht in unzulässiger Weise mehrfach verwendet werden können.

Die Ventileinheit wird über die Schläuche mit den Quellbehältern verbunden. Sie ist zum Befüllen, beispielsweise einer bestimmten Volumenmenge in eine Mehrzahl von Zielbehältern oder zur Verwendung über eine bestimmte Zeitspanne, vorgesehen. Nach Durchfluss eines vorgegebenen Volumens und/oder nach Ablauf einer vorgegebenen Zeitspanne wird die Ventileinheit abgenommen und durch eine neue ersetzt.

Auch der Ablauf des Gehäuses ist vorzugsweise untrennbar mit einem Schlauch verbunden, über welchen die Zubereitung in einen Zielbehälter transferiert wird.

### Kurzbeschreibung der Zeichnungen

Der Gegenstand der Erfindung soll im Folgenden Bezug nehmend auf ein Ausführungsbeispiel anhand der Zeichnungen Fig. 1 bis Fig. 14 erläutert werden.
Fig. 1 zeigt eine perspektivische Drahtdarstellung einer erfindungsgemäßen Ventileinheit.
Fig. 2 zeigt eine perspektivische Ansicht der Ventileinheit ohne Schläuche.
Fig. 3 ist eine Ansicht auf die Unterseite der Ventileinheit.
Fig. 4 ist eine Ansicht auf die Unterseite eines Gehäuseoberteils.
Fig. 5 ist eine Explosionsdarstellung der Ventileinheit.
Fig. 6 ist eine aufgeschnittene perspektivische Ansicht der Ventileinheit.
Bezugnehmend auf die Schnittdarstellungen gemäß Fig. 7a bis 7c und Fig. 8a bis Fig. 8c sollen die Öffnungsstellungen sowie die Schließstellung eines Ventils erläutert werden.
Fig. 9 ist eine Detaildarstellung des Kükens des Ventils.
Fig. 10 zeigt einen senkrecht zur Haupterstreckungsachse verlaufenden Schnitt des Kükens.
Fig. 11 ist eine Detaildarstellung der Anschlussstücke für die Quellbehälter.
Fig. 12 ist eine Detaildarstellung des Schlauchs des Ablaufs der Ventileinheit.
Fig. 13 ist eine schematische Darstellung einer Anlage zur Herstellung einer medizinischen Zubereitung.
Fig. 14 ist eine perspektivische Ansicht auf die anlagenseitige Aufnahme für eine erfindungsgemäße Ventileinheit.

### Detaillierte Beschreibung der Zeichnungen

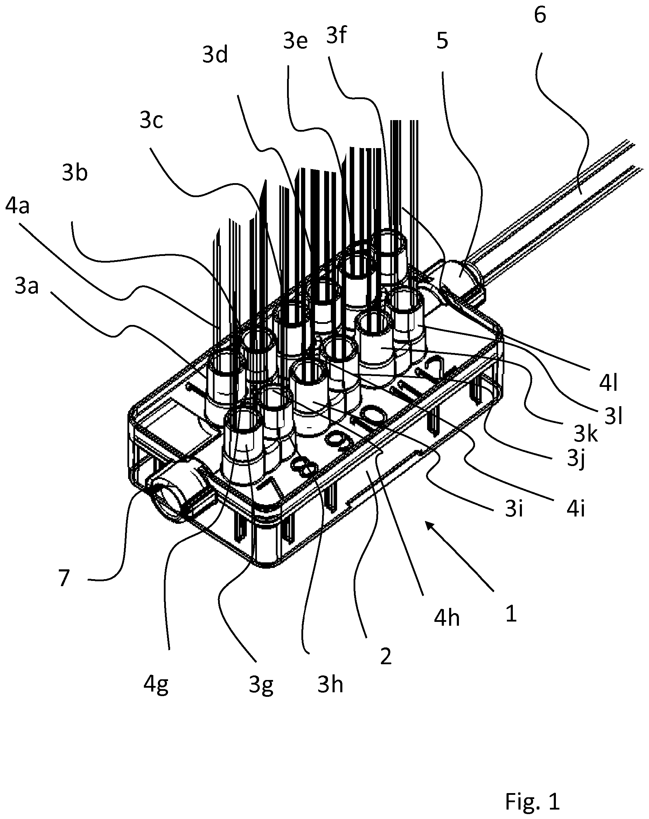

Fig. 1 zeigt in einer perspektivischen Darstellung eine Ausführungsform einer Ventileinheit 1, welche als Einweg-Bauteil ausgebildet ist.

Die Ventileinheit 1 umfasst ein Gehäuse 2 aus Kunststoff. Dieses kann in Art einer Kassette ausgebildet sein.

Das quaderförmig ausgebildete Gehäuse 2 umfasst auf seiner Oberseite eine Mehrzahl von Zuläufen 3a - 31. In diesem Ausführungsbeispiel sind zwölf Zuläufe 3a - 31 vorhanden. Die Ventileinheit 1 kann auch mit mehr oder weniger Zuläufen ausgebildet sein.

Das Gehäuse 2 hat vorzugsweise eine Höhe von 2 bis 6 cm, eine Breite von 6 bis 12 cm und eine Tiefe von 3 bis 8 cm.

Jeweils zwei Zuläufe, in diesem Ausführungsbeispiel z.B. die Zuläufe 3a und 3b sowie die Zuläufe 3c und 3d werden jeweils über ein einziges 3-Wegeventil 9 geöffnet und geschlossen.

Die hier dargestellte Ausführungsvariante einer Ventileinheit 1 umfasst sechs 3-Wegeventile. Jeder Zulauf 3a - 31 ist mit einem flexiblen Schlauch 4a - 41 verbunden. Die Schläuche 4a-41 sind in dieser Ansicht zur besseren Übersicht nur teilweise mit Bezugszeichen versehen, korrespondieren aber mit den Zuläufen 3a-31, d.h. jedem Zulauf 3a-31 ist ein Schlauch 4a-41 zugeordnet.

Die Schläuche 4a - 41 sind derart mit den Zuläufen 3a - 31 verbunden, vorzugsweise verschweißt oder verklebt, dass diese nicht zerstörungsfrei gelöst werden können.

In diesem Ausführungsbeispiel haben z.B. die Schläuche 4h und 4i einen kleineren Durchmesser als die Schläuche 4a und 41. Die Schläuche 4h und 4i dienen der Dosierung von Mikromengen.

Über einen Ablauf 5 und einen Schlauch 6, mit welchem der Ablauf 5 ebenfalls vorzugsweise untrennbar verbunden ist, kann ein Zielbehälter (nicht dargestellt) befüllt werden.

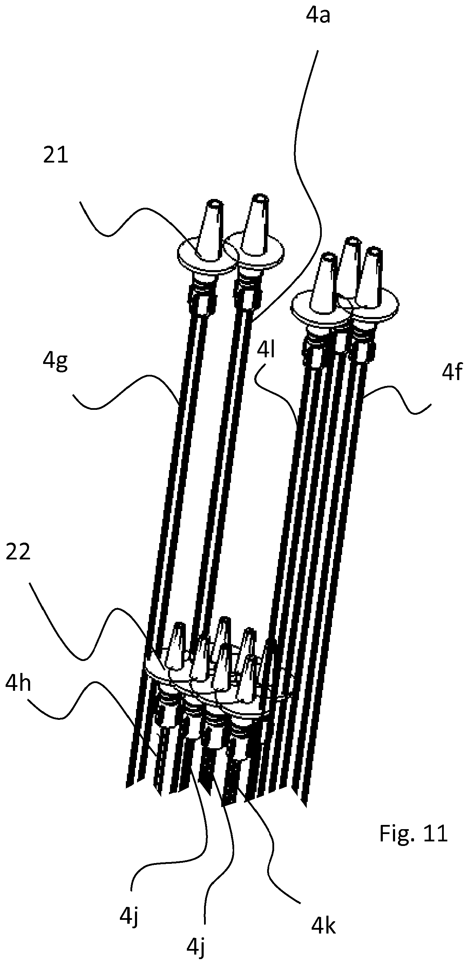

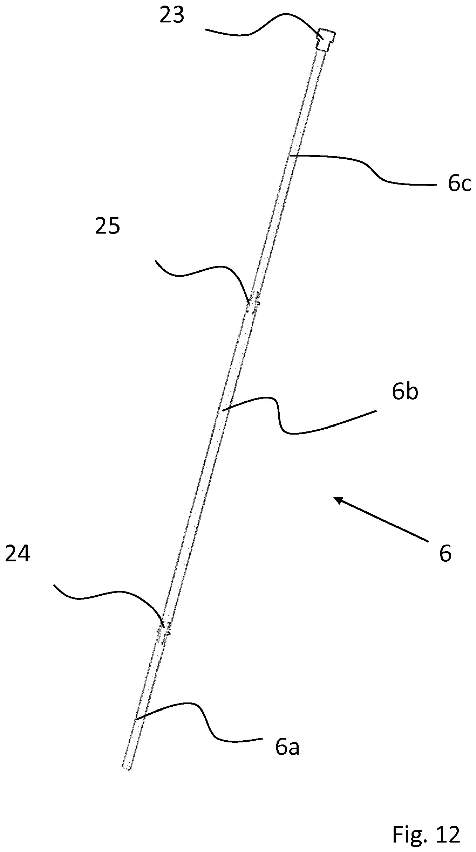

In dieser Darstellung ist nur das zum jeweiligen Anschluss des Gehäuses 2 zeigende Ende des Schlauchs 4a - 41, 6 dargestellt ist, nicht aber der Rest der Schläuche mit den Anschlüssen (siehe dazu Fig. 11 und Fig. 12).

In diesem Ausführungsbeispiel ist auf der dem Ablauf 5 gegenüberliegenden Seite ein weiterer Anschluss 7 vorgesehen. Über den Anschluss 7 kann die Ventileinheit 1 von beiden Seiten her angeschlossen werden. Ein nicht benötigter Ablauf 5 bzw. Anschluss 7 kann einfach verschlossen werden.

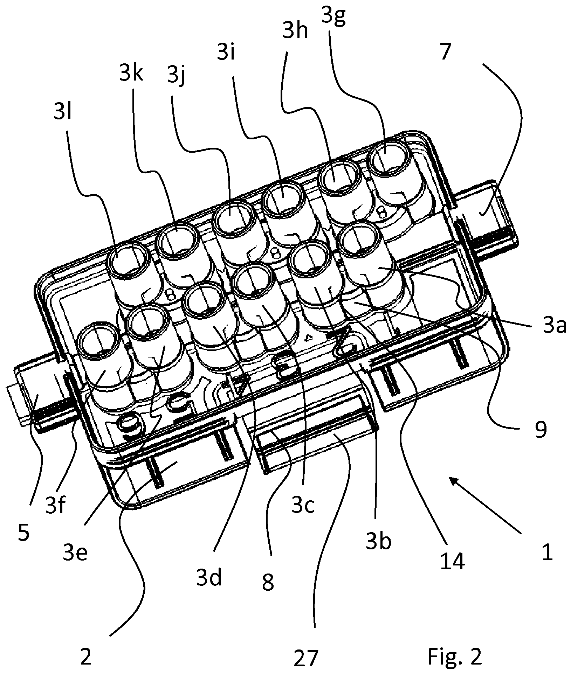

Fig. 2 zeigt eine perspektivische Ansicht des Gehäuses 2 der Ventileinheit 1, bei welcher die Schläuche 4a bis 41 für die Zuläufe 3a bis 31 und den Ablauf 5 ausgeblendet sind. Die Ansicht ist gegenüber Fig. 1 um ca. 180° gedreht

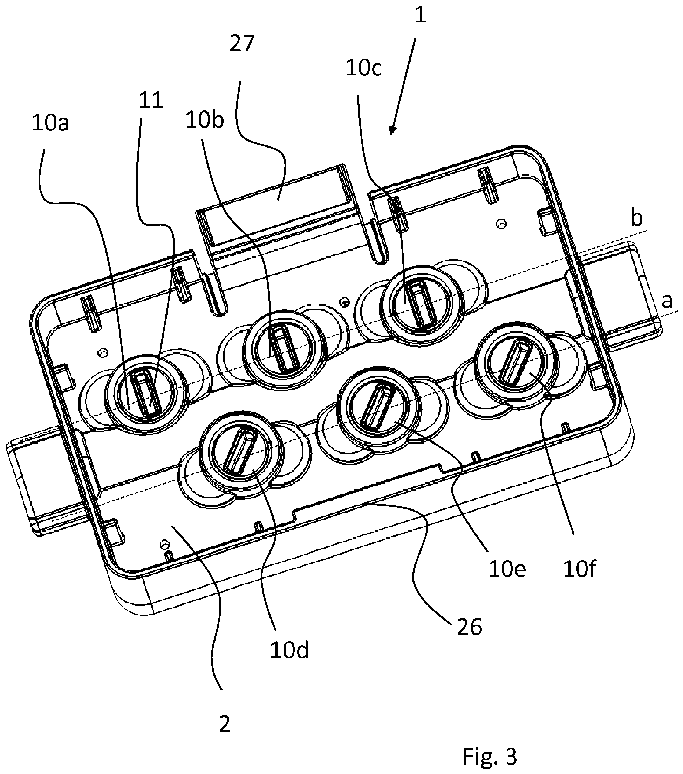

Zu erkennen ist in dieser Darstellung insbesondere der Rasthaken 8, um die Ventileinheit 1 auf einer Anlage 28 aufrasten zu können. Auf der gegenüberliegenden Seite wird das Gehäuse 2 über einen unter ein anlagenseitiges Formschlusselement greifenden Kragen 26 gehalten (siehe dazu auch Fig. 3).

Um die Ventileinheit 1 abzunehmen, braucht der Benutzer nur von vorne am Griff 27 des federnden Rasthakens 8 nach oben zu ziehen und die Verrastung wird gelöst, so dass die Ventileinheit 1 abgenommen werden kann.

Weiter zu erkennen sind die Ventile 9. Das Ventilgehäuse 14 der Ventile 9 ragt aus der Oberseite des Gehäuses 2 heraus. In der Figur ist lediglich ein Ventil 9 mit einem Bezugszeichen markiert.

Vorzugsweise sind die Ventile 9 für jeweils zwei Zuläufe 3a - 31 identisch ausgebildet, so dass sich nachfolgende Beschreibung eines Ventils 9 auf sämtliche Ventile 9 der Ventileinheit 1 bezieht.

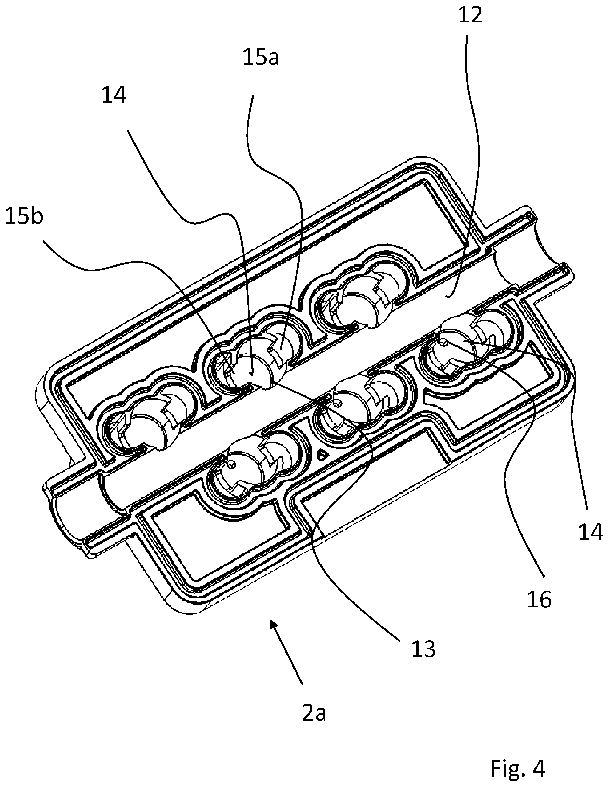

Das hier mit Bezugszeichen 9 gekennzeichnete Ventil 9 dient der Ansteuerung der Zuläufe 3a und 3b. Die Zuläufe 3a und 3b überschneiden sich in der Draufsicht auf die Oberseite der Ventileinheit 1 mit dem Ventilgehäuse 14. So lassen sich die Zuläufe 3a bis 31 nah aneinanderlegen. Gleichzeitig lässt sich ein Kanal vom jeweiligen Zulauf 3a, 3b einfach durch eine Öffnung (15a, 15b in Fig. 4) im Überschneidungsbereich der Zuläufe 3a, 3b und des Ventilgehäuses 14 bereitstellen.

Vorzugsweise hat das Ventilgehäuse 14 gegenüber dem Zulauf 3a, 3b den 1,1 bis 1,5 fachen Innendurchmesser. Beispielsweise hat das Ventilgehäuse 14 einen Innendurchmesser von 0,5 bis 2 cm.

Die Zuläufe 3a, 3b sind oberhalb des Ventilgehäuses 14 vorzugsweise weniger als die Hälfte ihres Außendurchmessers voneinander beabstandet.

Fig. 3 zeigt eine perspektivische Ansicht auf die Unterseite des Gehäuses 2.

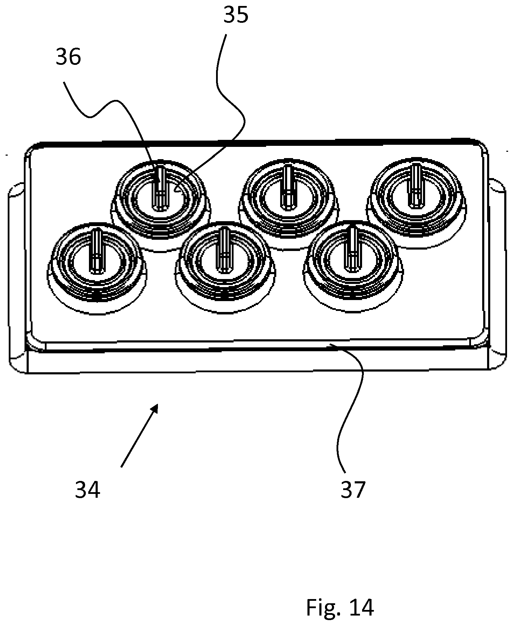

Die Ventile 9 weisen jeweils ein eingepresstes Küken 10a-10f auf, welches einen Schlitz 11 umfasst, der als Eingriffelement für einen mittels eines Motors betätigten Antrieb dient (siehe dazu die Mitnehmer 35 mit den Eingriffelementen 36 in Fig. 14) .

Das vollständige Öffnen eines Zulaufs 3a - 31 erfolgt durch etwa eine Viertelumdrehung, vorzugsweise eine Achteldrehung, des Kükens 10a-10f, wobei beim Drehen in eine Richtung der eine Anschluss und beim Drehen in die andere Richtung der andere Anschluss geöffnet wird. Die Drehung zum Erreichen der beiden Öffnungsstellungen erfolgt somit im Wesentlichen um +/-45° gegenüber der geschlossenen Mittelstellung.

Es werden somit 3/3-Wegeventile mit geschlossener Mittelstellung verwendet.

Die Küken 10a-10f sind in einer Aufsicht in den zwei geraden Reihen a und b angeordnet, wobei die Küken 10d-10f der Reihe a gegenüber den Küken 10a-10c der Reihe b axial gegenüber den jeweils gegenüberliegenden Küken versetzt sind.

Die Küken 10a-10c der Reihe b stehen in Mittelstellung, die entsprechenden Ventile 9 sind also geschlossen. Die Küken 10c-10e der Reihe a sind dagegen um eine Achteldrehung gedreht und es ist jeweils ein Zulauf (3a bis 31) offen. Es versteht sich aber, dass im Betrieb der Anlage 28 zur Herstellung einer medizinischen Zubereitung während eines Dosierschritts immer nur ein Ventil 9 geöffnet ist. Im Detail ist das Ventil 9 dann nur zu einem Zulauf der Zuläufe 3a bis 31 geöffnet.

Fig. 4 ist Darstellung eines Gehäuseoberteils 2a des Gehäuses 2 ohne die Küken 9. Das hier darstellte Ausführungsbeispiel zeigt also ein zweiteiliges Gehäuse 2. Bei einer anderen Ausführungsform ist das Gehäuse 2 einteilig, ansonsten aber entsprechend des hier dargestellten Ausführungsbeispiels ausgebildet.

Zu erkennen ist, dass die Ventilgehäuse 14 im Wesentlichen aus einem vorzugsweise kreiszylinderförmigen Kanal im Gehäuse 2 gebildet werden, welcher von der Unterseite des Gehäuses 2 her in das Gehäuse 2 führt. Die Küken 10 werden über die Unterseite des Gehäuses 2 in das Gehäuse 2 eingepresst.

Seitlich umfasst jedes Ventilgehäuse 14 eine Öffnung 15a, 15b welche jeweils zu dem ventilseitigen Zulauf 3a - 31 führt.

In zwei geöffneten Stellungen des Kükens 10 kann ein Fluid entweder von dem einen Zulauf über die Öffnung 15a oder vom dem anderen Zulauf über die Öffnung 15b das Küken 10 passieren und aus dem Ventilgehäuse 14 über die Öffnung 13 in einen zentralen Kanal 12 gelangen.

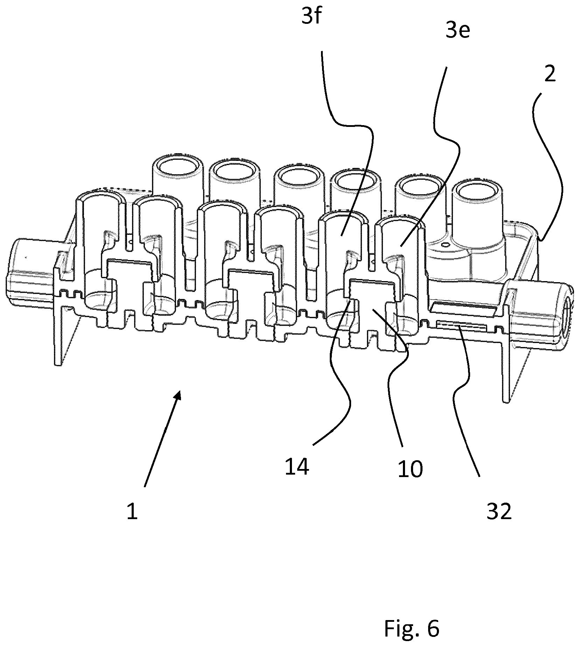

Die Öffnungen 15a, 15b sind in diesem Ausführungsbespiel im Wesentlichen schlitzförmig ausbildet und liegen auf Höhe einer Ausnehmung 18 des Kükens 10 (siehe dazu in Fig. 6).

Die kreiszylindrische Form des Ventilgehäuses 14 überschneidet sich mit dem Kanal 12. Die so gebildete Öffnung 13 des Ventilgehäuses 14 mündet in den Kanal 12. Durch die Öffnung 13 kann das Fluid in den Kanal 12 strömen.

Der Kanal 12 hat vorzugsweise zumindest im Bereich der Ventile 9 einen gleichbleibenden Querschnitt. Dies sorgt für gleich große Öffnungen 13 bei allen Ventilen 9, was wiederum einen etwa identischen Leitwert aller Ventile 9 im geöffneten Zustand sicherstellt.

Die Öffnungen 15a, 15b können, wie hier dargestellt, über zwei zusammengefügte Gehäusehälften realisiert werden.

Auf der Oberseite weist das Ventilgehäuse 14 ein Entlüftungsloch 16 auf. Über das Entlüftungsloch 16 kann die im Ventilgehäuse 14 vorhandene Luft beim Einpressen des Kükens 10 ausströmen.

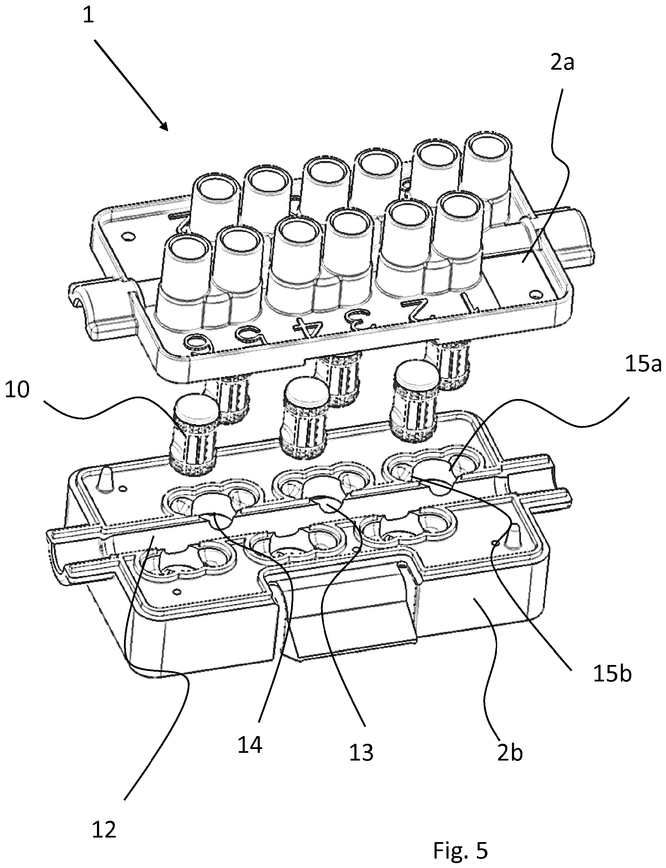

Fig. 5 zeigt eine Explosionsdarstellung der hier zweiteiligen Ventileinheit 1. Das Gehäuse 2 umfasst ein Gehäuseoberteil 2a und ein Gehäuseunterteil 2b.

Zu erkennen ist nun der untere Teil der kreiszylinderförmigen Ventilgehäuse 14 zur Aufnahme der Küken 10. Das Ventilgehäuse 14 mündet jeweils über eine Öffnung 13 in den zentralen Kanal 12.

Weiter zu erkennen sind die Öffnungen 15a und 15b welche zu den Zuläufen 3a - 31 führen.

Fig. 6 ist eine entlang der Haupterstreckungsrichtung der Ventileinheit 1 aufgeschnittene Ansicht.

Zu erkennen sind die in die Ventilgehäuse 14 eingepressten Küken 10. Über das mit Bezugszeichen 10 gekennzeichnete Küken kann der Zulauf 3e oder der Zulauf 3f mit dem zentralen Kanal 12 der Ventileinheit 1 verbunden werden.

Weiter zu erkennen ist, dass das Gehäuse 2 eine Platte 32 umfasst, welche als Träger für die Ventile 9 dient.

Die Platte 32 ist in diesem Ausführungsbeispiel zweilagig ausgebildet, da das Gehäuse 2 zweiteilig ausgeführt ist. Bei einer alternativen hier nicht dargestellten einteiligen Ausführung des Gehäuses 2 wäre die Platte 32 einlagig.

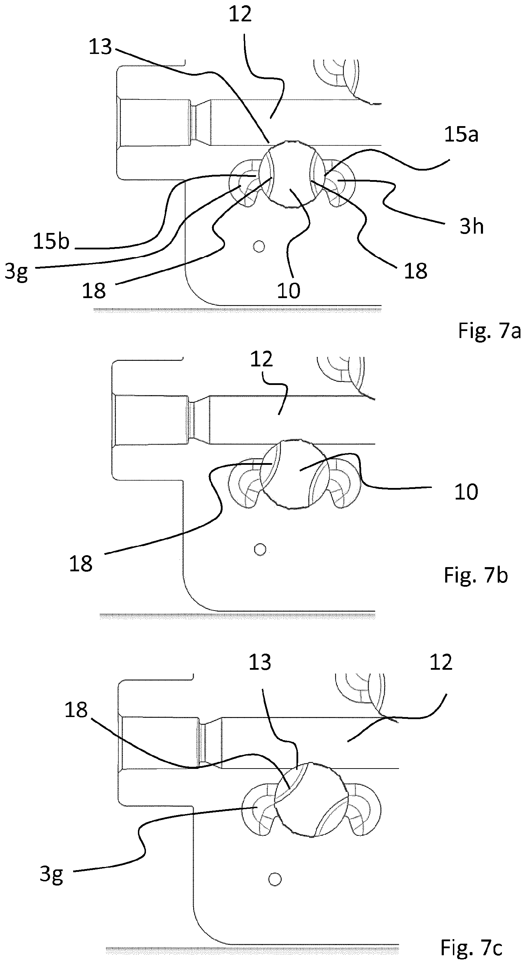

Fig. 7a bis 7c sind Schnittansichten eines Ventils 9 in verschiedenen Stellungen.

In der Ansicht gemäß Fig. 7a befindet sich das Küken 10 des Ventils 9 in geschlossener Mittelstellung. Die Öffnung 13 zwischen dem Kanal 12 und dem Ventilgehäuse 13 ist durch das Küken 10 verschlossen. Dadurch kann kein Fluid über den Zulauf 3h und die Öffnung 15a bzw. den Zulauf 3g und die Öffnung 15b in den Kanal 12 gelangen.

Fig. 7b zeigt das Ventil 9 während des Öffnens. Die mantelseitige Ausnehmung 18 des Kükens 10 erreicht die Öffnung 13 des Kanals 12 und Fluid kann durch die Öffnung 13 in den Kanal 12 strömen.

Fig. 7c zeigt das Ventil 9 in vollständig geöffneter Stellung. Nach einer Achteldrehung ist ein Kanal freigegeben und Fluid kann vom Zulauf 3g über die mantelseitige Außenfläche des Kükens 10 entlang der Ausnehmung 18 durch die Öffnung 13 in den Kanal 12 fließen.

Im Betrieb der Anlage 28 kann nunmehr Flüssigkeit aus dem mit dem Zulauf 3g verbundenen Quellbehälter 29 entnommen werden.

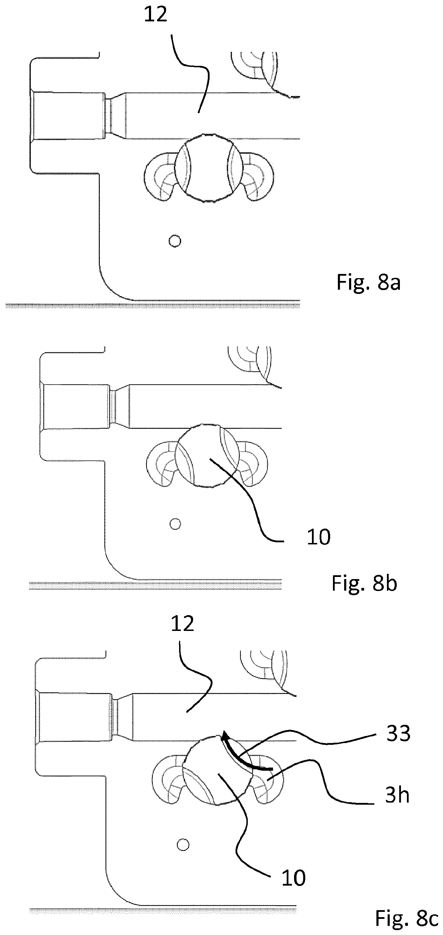

Die Darstellung gemäß Fig. 8a bis Fig. 8c entspricht Fig. 7a bis Fig. 7c mit dem Unterschied, dass das Küken 10 ausgehend von der in Fig. 8a dargestellten geschlossenen Mittelstellung eine Achteldrehung, in die entgegengesetzte Richtung gedreht wird.

Wie in Fig. 8c zu erkennen, ist nunmehr der Zulauf 3h mit dem Kanal 12 verbunden. Die Fluidströmung wird durch den eingezeichneten Pfeil 33 symbolisiert.

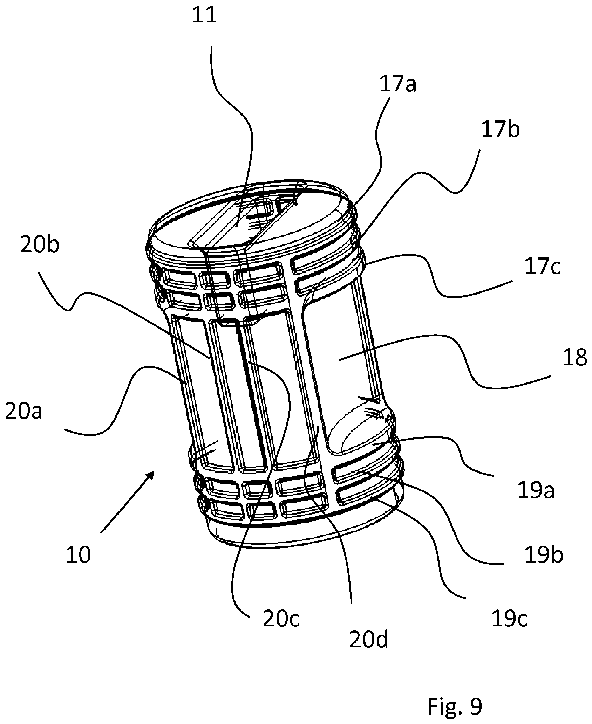

Fig. 9 ist eine Detaildarstellung des Kükens 10 in einer perspektivischen Drahtdarstellung.

An seiner Unterseite weist das Küken 10 als Eingriffelement für einen Antrieb einen Schlitz 11 auf (siehe dazu auch Fig. 14) .

Das Küken 10 ist im Wesentlichen kreiszylinderförmig ausgebildet und wird in das Ventilgehäuse 14 eingepresst.

Vorzugsweise hat das Küken 10 einen Durchmesser von 0,5 bis 2 cm und/oder eine Höhe von 0,5 bis 3 cm.

Um im geöffneten Zustand einen Kanal im Ventil 9 freizugeben, umfasst das Küken 10 zwei sich gegenüberliegende Ausnehmungen 18 (in dieser Ansicht ist nur eine Ausnehmung zu erkennen).

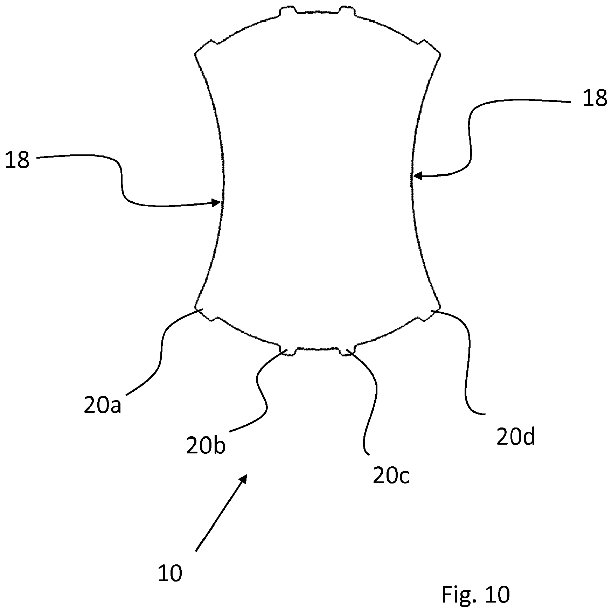

Die Ausnehmungen 18 nehmen vorzugsweise ein Viertel des Umfangs des Kükens 10 ein (siehe dazu Fig. 10).

Oberhalb und unterhalb der Ausnehmungen 18 sind jeweils zwei Bereiche vorgesehen, welche die umlaufenden und axial voneinander beabstandeten Stege 17a - 17 c und 19a - 19c aufweisen.

Die Stege 19a - 19c wirken oberhalb der Ausnehmung 18 als Dichtlippe, während die Stege 17a - 17c Dichtlippen an der Unterseite des Gehäuses 14 ausbilden, also das Küken 10 an der Unterseite des Gehäuses 14 abdichten.

In dem Bereich, in dem keine Ausnehmungen 18 vorhanden sind, umfasst das Küken 10 axial verlaufende Stege 20a - 20d, welche als Dichtlippen zwischen der Öffnung 13 zum Kanal 12 und den einlassseitigen Öffnungen 15a, 15b des Ventilgehäuses 14 wirksam sind.

Über die Stege 20a - 20d ist der ventilseitige Auslass 15a und 15b in geschlossener Position gedichtet bzw. in geöffneter Stellung der jeweils nicht geöffnete Zulauf 3a - 31 blockiert.

Fig. 10 zeigt (auf der Höhe der Ausnehmung 18) eine radiale Schnittebene des Kükens 10. Zu erkennen sind die beiden sich gegenüberliegenden gekrümmten Ausnehmungen 18, welche sich axial über einen mittleren Bereich des Kükens 10 erstrecken (siehe dazu Fig. 9).

Die Ausnehmungen 18 nehmen jeweils etwa ein Viertel des Umfangs des Mantels des Kükens 10 ein.

Weiter zu erkennen sind die axial verlaufenden Stege 20a - 20d, welche um den Mantel des Kükens 10 in dem Bereich verteilt sind, in welchen sich die Ausnehmungen 18 nicht erstrecken.

Fig. 11 zeigt die Anschlussstücke 21, 22 der Schläuche 4a - 41 der Zuläufe.

Die Anschlussstücke 21, 22 können beispielsweise als Luer-Lock-Anschluss ausgebildet sein und/oder ein Spike umfassen.

Zu erkennen ist, dass beispielsweise der Schlauch 4h kürzer ist als der Schlauch 4g. Der Schlauch 4h hat auch einen kleineren Durchmesser und dient der Zudosierung von Mikromengen.

Fig. 12 zeigt eine Darstellung des Schlauchs 6 für den Ablauf 5.

Dieser umfasst einen Anschluss 23 für den Zielbehälter, welcher beispielsweise als Luer-Lock-Anschluss ausgebildet sein kann.

Der Schlauch 6 ist in die Schlauchabschnitte 6a - 6c unterteilt, welche jeweils mittels eines Verbindungsstücks 24, 25 verbunden sind.

Der mittlere Abschnitt 6b hat einen größeren Durchmesser als die angrenzenden Abschnitte 6a und 6c und dient der Verwendung des Schlauchs 6 in einer Peristaltikpumpe, insbesondere einer Schlauchpumpe in Gestalt einer Rollenpumpe oder einer Fingerpumpe (nicht dargestellt).

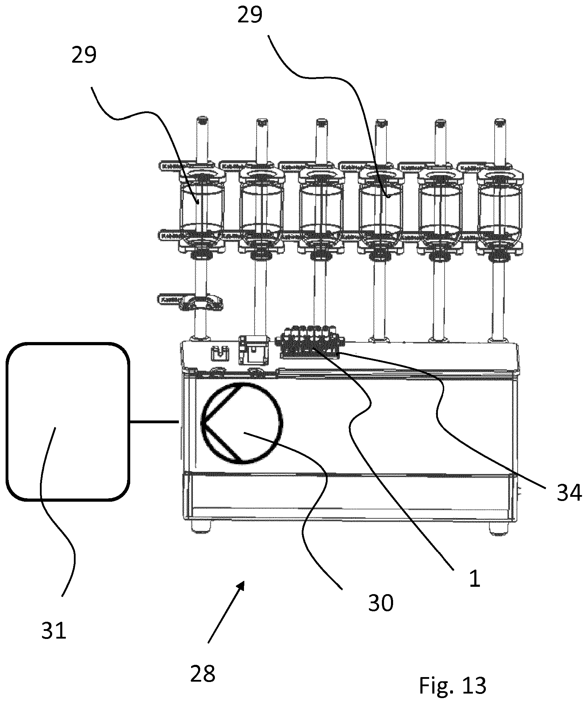

Fig. 13 ist eine schematische Darstellung einer Anlage 28 zur Herstellung einer medizinischen Zubereitung, im Speziellen zur Herstellung einer Zubereitung zur parenteralen Ernährung. Die Ventileinheit 1 ist ein separates Bauteil, das auf der Anlage 28 befestigt werden kann. Die Ventileinheit 1 kann nach einer Benutzung wieder abgenommen und, insbesondere zusammen mit den Schläuchen 4a-41 und 6, entsorgt werden.

Die Ventileinheit 1 ist hier auf der Oberseite der Anlage 28 auf einer Aufnahme 34 aufgerastet. Die Schläuche 4a bis 41 und 6 der Ventileinheit 1 sind nicht dargestellt. Die Schläuche 4a bis 41 der Zuläufe 3a bis 31 werden mit den Quellbehältern 29 verbunden. Dargestellt sind hier nur die Quellbehälter 29 für Mikromengen, beispielhaft bereitgestellt durch Vials.

Der Schlauch 6 des Ablaufs 5 wird mit einem Zielbehälter (nicht dargestellt) verbunden, welcher auf eine Waage 31 gelegt wird, die mit der Anlage 28 verbunden ist.

Über eine Pumpe 30 kann computergesteuert eine patientenspezifische Zubereitung in den Zielbehälter transferiert werden, wobei über die Ventile 9 der Ventileinheit 1 gesteuert wird, aus welchem Quellbehälter 29 Flüssigkeit entnommen wird. Über die Waage 31 kann die entnommene Menge kontrolliert werden.

Fig. 14 ist eine perspektivische Detaildarstellung der anlagenseitigen Aufnahme 34 für die Ventileinheit 1.

Die Aufnahme 34 umfasst einen hervorragenden Rand 37, welcher als Formschlusselement für den Rasthaken 8 sowie den Kragen 26 der Ventileinheit 1 dient.

Weiter umfasst die Aufnahme 34 Mitnehmer 35, welche mittels eines anlagenseitigen Motors gedreht werden können.

Die Mitnehmer 35 sind entsprechend der Küken 10 in zwei geraden Reihen angeordnet, wobei die Mitnehmer 35 der einen Reihen axial gegenüber den Mitnehmern 35 der anderen Reihe versetzt sind.

Die Mitnehmer 35 umfassen in der Art eines Schraubendrehers ausgebildete Eingriffelemente 36, die im aufgerasteten Zustand der Ventileinheit 1 in die Schlitze 11 der Küken 10 greifen.

So können die Küken 10 über die Mitnehmer 35 gedreht und die Ventile 9 betätigt werden.

Durch die Erfindung kann eine robuste und zuverlässige Ventileinheit für eine Anlage zur Zubereitung von parenteraler Ernährung bereitgestellt werden.

### Bezugszeichenliste

- 1: Ventileinheit
- 2: Gehäuse
- 2a: Gehäuseoberteil
- 2b: Gehäuseunterteil
- 3a - 31: Zulauf
- 4a - 41: Schlauch
- 5: Ablauf
- 6: Schlauch
- 6a - 6c: Schlauchabschnitt
- 7: Anschluss
- 8: Rasthaken
- 9: Ventil
- 10, 10a-10f: Küken
- 11: Schlitz
- 12: Kanal
- 13: Öffnung
- 14: Ventilgehäuse
- 15a,: 15b Öffnung
- 16: Entlüftungsloch
- 17a - 17c: Steg
- 18: Ausnehmung
- 19a - 19c: Steg
- 20a - 20d: Steg
- 21: Anschluss
- 22: Anschluss
- 23: Anschluss
- 24: Verbindungsstück
- 25: Verbindungsstück
- 26: Kragen
- 27: Griff
- 28: Anlage
- 29: Quellbehälter
- 30: Pumpe
- 31: Wage
- 32: Platte
- 33: Pfeil
- 34: Aufnahme
- 35: Mitnehmer
- 36: Eingriffelement
- 37: Rand

## Patentansprüche

1. Ventileinheit (1) für eine Anlage (28) zur Herstellung einer medizinischen Zubereitung, insbesondere einer Zubereitung zur parenteralen Ernährung, umfassend ein Gehäuse (2) mit einer Mehrzahl von Zuläufen (3a-31) und einem Ablauf (5), wobei die Zuläufe (3a-31) über Ventile (9) mit dem Ablauf (5) verbindbar sind, **dadurch gekennzeichnet, dass** die Ventile (9) als zumindest 3-Wegeventile ausgebildet sind, wobei das Ventil (9) zumindest zwei Zuläufe (3a-31) und einen Ablauf (5) umfasst, so dass zwei Quellbehälter (29) an einem einzigen Ventil (9) angeschlossen sein können.

2. Ventileinheit (1) nach einem der vorstehenden Ansprüche, **dadurch gekennzeichnet, dass** der Ablauf (5) mit einem im Gehäuse (2) angeordneten Kanal (12) verbunden ist, wobei der Kanal (12) vorzugsweise seitlich zu den Ventilen (9) abgehende Öffnungen (13) aufweist.

3. Ventileinheit (1) nach dem vorstehenden Anspruch, **dadurch gekennzeichnet, dass** die Ventile (9) als 3/3-Wegeventile mit einer gesperrten Mittelstellung ausgebildet sind.

4. Ventileinheit (1) nach einem der vorstehenden Ansprüche, **dadurch gekennzeichnet, dass** die Ventile (9) in zumindest zwei, vorzugsweise geraden, Reihen (a,b) angeordnet sind, wobei die Ventile (9) einer Reihe (a) in axialer Richtung versetzt gegenüber den Ventilen (9) in der anderen Reihe (b) angeordnet sind.

5. Ventileinheit (1) nach dem vorstehenden Anspruch, **dadurch gekennzeichnet, dass** der Kanal (12) zumindest im Bereich der Ventile (9) einen gleichbleibenden Durchmesser aufweist.

6. Ventileinheit (1) nach einem der vorstehenden Ansprüche, **dadurch gekennzeichnet, dass** die Zuläufe (3a - 31) und/oder der Ablauf (5), vorzugsweise untrennbar, mit Schläuchen (4a - 41, 6) verbunden sind.

7. Ventileinheit (1) nach einem der vorstehenden Ansprüche, **dadurch gekennzeichnet, dass** die Zuläufe (3a-31) mit Schläuchen (4a-41) verbunden sind, die in zumindest zwei verschiedenen Durchmessern vorhanden sind und/oder dass der Ablauf (5) mit einem Schlauch (6) verbunden ist, welcher zumindest drei Abschnitte (6a-6c) umfasst, wobei ein mittlerer Abschnitt (6b) einen gegenüber den angrenzenden Abschnitten (6a,6c) vergrößerten Querschnitt aufweist.

8. Ventileinheit (1) nach einem der vorstehenden Ansprüche, **dadurch gekennzeichnet, dass** die Ventileinheit (1) zumindest vier, vorzugsweise zumindest acht und besonders bevorzugt zumindest zwölf Zuläufe (3a-31) aufweist.

9. Ventileinheit (1) nach einem der vorstehenden Ansprüche, **dadurch gekennzeichnet, dass** das Gehäuse (2) Rastmittel zur Befestigung an einer Antriebseinheit der Anlage (28) zur Herstellung einer medizinischen Zubereitung aufweist.

10. Ventileinheit (1) nach einem der vorstehenden Ansprüche, **dadurch gekennzeichnet, dass** die Ventile (9) Küken (10) aus einem Elastomer aufweisen, welche vorzugsweise schmiermittelfrei in das Gehäuse (2) eingesetzt sind.

11. Ventileinheit (1) nach einem der vorstehenden Ansprüche, **dadurch gekennzeichnet, dass** die Ventile Küken (10) aufweisen, welche auf einer Unterseite ein Eingriffelement für einen Antrieb aufweisen, welches insbesondere als Schlitz (11) ausgebildet ist.

12. Ventileinheit (1) nach einem der vorstehenden Ansprüche, **dadurch gekennzeichnet, dass** die Ventile (9) Küken (10) umfassen, wobei ein Fluid in einer geöffneten Stellung an einer Außenfläche der Küken (10) vorbeiführbar ist.

13. Ventileinheit (1) nach einem der vorstehenden Ansprüche, **dadurch gekennzeichnet, dass** die Küken (10) eine Ausnehmung (18), vorzugsweise zwei Ausnehmungen (18), umfassen, über die in einer geöffneten Stellung des Ventils (9) ein Kanal zwischen einem Zulauf und dem Ablauf des Ventils (9) ausgebildet ist, und/oder dass die Küken (10) aus einem Elastomer bestehen und oberhalb und unterhalb der Ausnehmung (18) zumindest einen umlaufenden Steg (17a-c, 19a-c) aufweisen, welcher gegenüber dem Gehäuse (2) als Dichtung wirkt.

14. Ventileinheit (1) für eine Anlage zur Herstellung einer medizinischen Zubereitung, insbesondere einer Zubereitung zur parenteralen Ernährung, umfassend ein Gehäuse (2) mit einer Mehrzahl von Zuläufen (3a-31) und einem Ablauf (5), wobei die Zuläufe (3a-31) über Ventile (9) mit dem Ablauf (5) verbindbar sind, insbesondere Ventileinheit (1) nach einem der vorstehenden Ansprüche, **dadurch gekennzeichnet, dass** die Zuläufe (3a-31) jeweils mit einem Schlauch (4a-41) verbunden sind, wobei die Schläuche (4a-41) untrennbar mit dem Gehäuse (2) verbunden sind.

15. Anlage (28) zur Herstellung einer medizinischen Zubereitung, insbesondere Anlage zur Herstellung von Parenteralnahrung, umfassend eine Ventileinheit (1) nach einem der vorstehenden Ansprüche.

## Claims

1. Valve unit (1) for an installation (28) for producing a medical preparation, particularly a parenteral nutrition preparation, comprising a housing (2) with a plurality of inflows (3a-31) and one outflow (5), wherein the inflows (3a-31) are connectable to the outflow (5) by means of valves (9), **characterized in that** the valves (9) are configured as at least 3-way valves, wherein the valve (9) comprises at least two inflows (3a-31) and one outflow (5), such that two source containers (3) are connectable to a single valve (9).

2. Valve unit (1) according to one of the preceding claims, **characterized in that** the outflow (5) is connected to a duct (12) arranged in the housing (2), wherein the duct (12) has openings (13) that preferably lead to the valves (9) laterally.

3. Valve unit (1) according to the preceding claim, **characterized in that** the valves (9) are configured as 3/3-way valves with a blocked central position.

4. Valve unit (1) according to one of the preceding claims, **characterized in that** the valves (9) are arranged in at least two preferably straight rows (a, b), wherein the valves (9) of a row (a) are arranged so as to be offset in the axial direction with respect to the valves (9) in the other row (b).

5. Valve unit (1) according to the preceding claim, **characterized in that** the duct (12) at least in the region of the valves (9) has a constant diameter.

6. Valve unit (1) according to one of the preceding claims, **characterized in that** the inflows (3a-31) and/or the outflow (5) are/is preferably inseparably connected to hoses (4a-41, 6).

7. Valve unit (1) according to one of the preceding claims, **characterized in that** the inflows (3a-31) are connected to hoses (4a-41) which are present in at least two different diameters and/or **in that** the outflow (5) is connected to a hose (6) comprising at least three portions (6a-6c), wherein a central portion (6b) has a cross-section that is enlarged with respect to the adjacent portions (6a, 6c).

8. Valve unit (1) according to one of the preceding claims, **characterized in that** the valve unit (1) has at least four, preferably at least eight and especially preferably at least twelve inflows (3a-31).

9. Valve unit (1) according to one of the preceding claims, **characterized in that** the housing (2) has latching means for fastening to a drive unit of the installation (28) for producing a medical preparation.

10. Valve unit (1) according to one of the preceding claims, **characterized in that** the valves (9) have plug cocks (10) made of an elastomer, preferably inserted without lubricant in the housing (2).

11. Valve unit (1) according to one of the preceding claims, **characterized in that** the valves have plug cocks (10) which on a lower side have an engagement element for a drive, said engagement element being configured particularly as a slot (11).

12. Valve unit (1) according to one of the preceding claims, **characterized in that** the valves (9) comprise plug cocks (10), wherein in an open position a fluid can be guided along an outer surface of the plug cocks (10).

13. Valve unit (1) according to one of the preceding claims, **characterized in that** the plug cocks (10) comprise a recess (18), preferably two recesses (18), whereby in an open position of the valve (9) a duct is configured between an inflow and the outflow of the valve (9), and/or **in that** the plug cocks (10) are made of an elastomer and have at least one encircling rib (17a-c, 19a-c) above and below the recess (18), acting as a seal in relation to the housing (2).

14. Valve unit (1) for an installation for producing a medical preparation, particularly a parenteral nutrition preparation, comprising a housing (2) with a plurality of inflows (3a-31) and one outflow (5), wherein the inflows (3a-31) are connectable to the outflow (5) by means of valves (9), particularly the valve unit (1) according to one of the preceding claims, **characterized in that** the inflows (3a-31) are in each case connected to a hose (4a-41), wherein the hoses (4a-41) are inseparably connected to the housing (2).

15. Installation (28) for producing a medical preparation, particularly an installation for producing parenteral nutrition, comprising a valve unit (1) according to one of the preceding claims.

## Revendications

1. Unité (1) de soupapes pour une installation (28) pour produire une préparation médicamenteuse, en particulier une préparation pour la nutrition parentérale, comprenant une carcasse (2) avec une pluralité d'entrées (3a-31) et une sortie (5), dans laquelle les entrées (3a-31) peuvent être reliées par le biais de soupapes (9) avec la sortie (5), **caractérisée en ce que** les soupapes (9) sont configurées comme des soupapes d'au moins 3 voies, dans laquelle la soupape (9) comprend au moins deux entrées (3a-31) et une sortie (5), de manière que deux récipients (29) d'origine peuvent être reliés à une seule soupape (9).

2. Unité (1) de soupapes selon l'une des revendications précédentes, **caractérisée en ce que** la sortie (5) est reliée à un canal (12) disposé dans la carcasse (2), dans laquelle le canal (12) présente des ouvertures (13) de sortie de préférence de manière latérale vers les soupapes (9).

3. Unité (1) de soupapes selon la revendication précédente, **caractérisée en ce que** les soupapes (9) sont configurées comme des soupapes de 3/3 voies avec une position centrale verrouillée.

4. Unité (1) de soupapes selon l'une des revendications précédentes, **caractérisée en ce que** les soupapes (9) sont disposées dans au moins deux rangées (a, b), de préférence droites, dans laquelle les soupapes (9) d'une rangée (a) sont disposées dans la direction axiale de manière déplacée par rapport aux soupapes (9) dans l'autre rangée (b).

5. Unité (1) de soupapes selon la revendication précédente, **caractérisée en ce que** le canal (12) présente un diamètre constant au moins dans la zone des soupapes (9).

6. Unité (1) de soupapes selon l'une des revendications précédentes, **caractérisée en ce que** les entrées (3a-31) et/ou la sortie (5) sont reliées, de préférence de manière inséparable, avec des tubes (4a-41, 6) flexibles.

7. Unité (1) de soupapes selon l'une des revendications précédentes, **caractérisée en ce que** les entrées (3a-31) sont reliées à des tubes (4a-41) flexibles qui sont présents dans au moins deux diamètres différents et/ou **en ce que** la sortie (5) est reliée à un tube (6) flexible comprenant au moins trois tronçons (6a-6c), dans laquelle un tronçon (6b) central présente une section transversale élargie par rapport aux tronçons (6a, 6c) attenants.

8. Unité (1) de soupapes selon l'une des revendications précédentes, **caractérisée en ce que** l'unité (1) de soupapes présente au moins quatre, de préférence au moins huit et de manière spécialement préférée au moins douze entrées (3a-31).

9. Unité (1) de soupapes selon l'une des revendications précédentes, **caractérisée en ce que** la carcasse (2) présente des moyens d'enclenchement pour la fixation à une unité d'actionnement de l'installation (28) pour produire une préparation médicamenteuse.

10. Unité (1) de soupapes selon l'une des revendications précédentes, **caractérisée en ce que** les soupapes (9) présentent des robinets à tournant (10) composés d'un élastomère, qui sont insérés de préférence sans lubrifiant dans la carcasse (2).

11. Unité (1) de soupapes selon l'une des revendications précédentes, **caractérisée en ce que** les soupapes présentent des robinets à tournant (10) présentant sur un côté inférieur un élément d'accrochage pour un actionneur qui est configuré en particulier comme une rainure (11).

12. Unité (1) de soupapes selon l'une des revendications précédentes, **caractérisée en ce que** les soupapes (9) comprennent des robinets à tournant (10), dans laquelle un fluide peut passer dans une position ouverte par une surface extérieure des robinets à tournant (10).

13. Unité (1) de soupapes selon l'une des revendications précédentes, **caractérisée en ce que** les robinets à tournant (10) comprennent un évidement (18), de préférence deux évidements (18), au moyen desquels dans une position ouverte de la soupape (9) est configuré un canal entre une entrée et la sortie de la soupape (9), et/ou **en ce que** les robinets à tournant (10) sont composés d'un élastomère et présentent au-dessus et au-dessous de l'évidement (18) au moins une nervure (17a-c, 19a-c) environnante agissant comme un joint par rapport à la carcasse (2).

14. Unité (1) de soupapes pour une installation pour produire une préparation médicamenteuse, en particulier une préparation pour la nutrition parentérale, comprenant une carcasse (2) avec une pluralité d'entrées (3a-31) et une sortie (5), dans laquelle les entrées (3a-31) peuvent être reliées au moyen de soupapes (9) avec la sortie (5), en particulier l'unité (1) de soupapes selon l'une des revendications précédentes, **caractérisée en ce que** les entrées (3a-31) sont reliées dans chaque cas à un tube (4a-41) flexible, dans laquelle les tubes (4a-41) flexibles sont reliés de manière inséparable à la carcasse (2).

15. Installation (28) pour produire une préparation médicamenteuse, en particulier une installation pour produire une nutrition parentérale, comprenant une unité (1) de soupapes selon l'une des revendications précédentes.
